# EUROPEAN PATENT APPLICATION

(11) **EP 2 383 985 A2**
(43) Date of publication of application: **02.11.2011**
(21) Application number: 11163123.0
(22) Date of filing: 20.04.2011
(51) Int. Cl.: H04N 5/445

(54) **Monitor capable of providing a predetermined format and method thereof**

(30) Priority: 28.04.2010 TW 99113466
(71) Applicant: ASUSTek Computer Incorporated, Beitou District Taipei Taiwan 112 (CN)
(72) Inventor: Lu, Yuan-Li, 112, Taipei City (TW); Chiou, Yaw-Huei, 112, Taipei City (TW)
(74) Representative: Becker, Eberhard

(57) **Abstract**

A monitor capable of providing predetermined format is provided. The monitor includes, an on screen display (OSD), an input device, and a processor. The OSD has a predetermined format drawing module for drawing a predetermined format in at least one size. The input device is used for inputting a selected signal. The processor is used for receiving the selected signal, and executing the predetermined format drawing module to draw a predetermined format on the panel of the monitor. A starting position of the predetermined format can be at any position on the panel of the monitor, and the predetermined format corresponds to the actual size of the standard photos, the standard documents, the standard letter or grids format.

## Description

### BACKGROUND OF THE INVENTION

### Field of the Invention

The invention relates to a monitor, more particularly, to a monitor capable for providing varies predetermined format and a method thereof.

### Description of the Related Art

When the photographers, the printers or the consumers use the software to design, typeset, displaying the photos or drawing the pictures, the proportion of the fonts, the font spacing, the font size or the photo size displayed on the monitor are different from the ones printed finally. For example, when the user uses the software to edit the objects (such as the documents or photos) on the monitor, the absolute size of the objects displayed on the 17 inches monitor, 19 inches monitor and 22 inches monitor are different from the actual absolute size. The software adjusts the objects zoom-in or out based on the size of the monitor. Thus, the documents or pictures displayed on the monitor are not in actual sizes, and the user cannot know the visual effect after the objects are printed as a real object.

In the conventional practice, the photographers or the printers print the pictures with the proportion 1:1 to the actual size first, and then measure the absolute size with the drawing equipment or the rulers to make the object printed matches the actual size; or after the photos or the prints are printed as the final products, the actual size are measured and cut as required. Consequently, it wastes a lot of time on the repeated printing and measuring, and consumes much paper and printing resource.

### BRIEF SUMMARY OF THE INVENTION

A monitor for providing a predetermined format, comprising: a panel; an on screen display (OSD) has a predetermined format drawing module, capable to draw a predetermined format from any position on the panel; an input device for inputting a selected signal; and a processor for receiving the selected signal, and executing the predetermined format drawing module in the OSD according to the selected signal; wherein the predetermined format corresponds to the actual size of a variety of objects.

A method for providing a predetermined format on a monitor, comprising: providing an OSD including a predetermined format drawing module for drawing a predetermined format; inputting a selected signal via an input device; receiving the selected signal by a processor, and the processor executing the predetermined format drawing module according to the selected signal to draw a predetermined format on the panel; wherein an starting position of the predetermined format is at any position of the panel.

These and other features, aspects and advantages of the present invention will become better understood with regard to the following description, appended claims, and accompanying drawings.

### BRIEF DESCRIPTION OF THE DRAWINGS

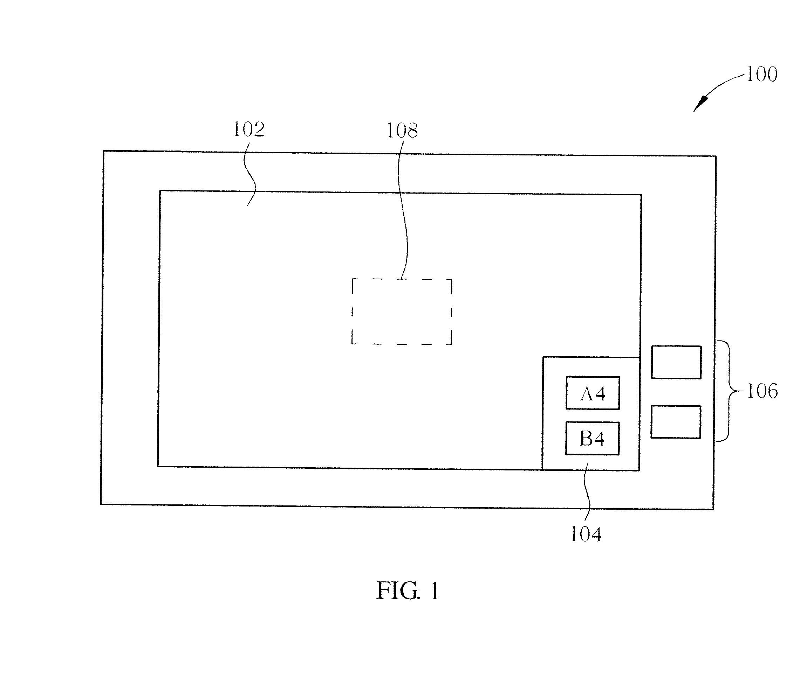

FIG. 1 is a schematic diagram showing a monitor capable of providing a predetermined format in different sizes in an embodiment;

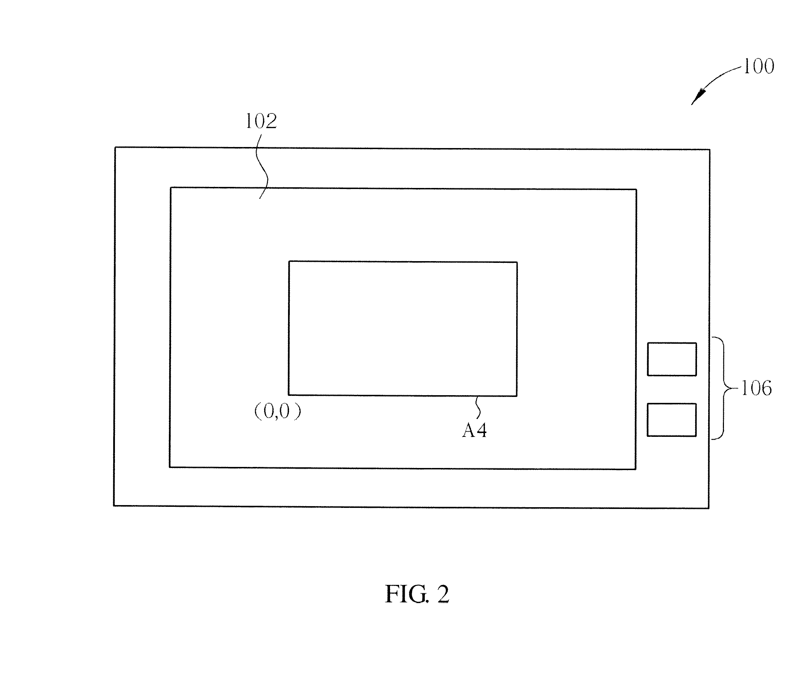

FIG. 2 is a schematic diagram showing that the predetermined format drawing module is operated in the OSD for drawing the actual size of the predetermined format (for example, the actual size of the standard A4 document) on a 19 inches monitor with solid lines according to an input device in an embodiment;

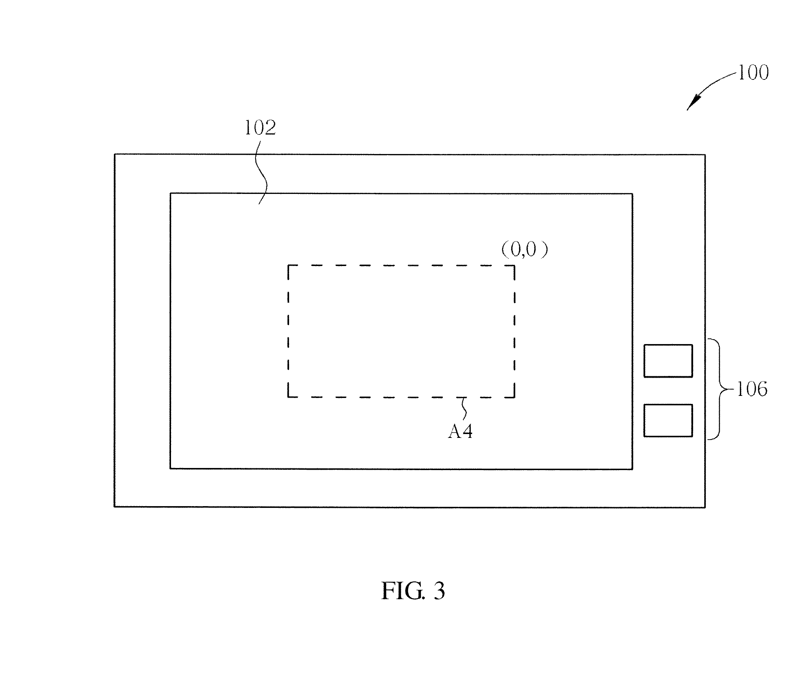

FIG 3 is a schematic diagram showing that the predetermined format drawing module is operated in the OSD for drawing the actual size of the predetermined format (for example, the actual size of the standard A4 document) on a 19 inches monitor with dotted lines according to an input device in an embodiment;

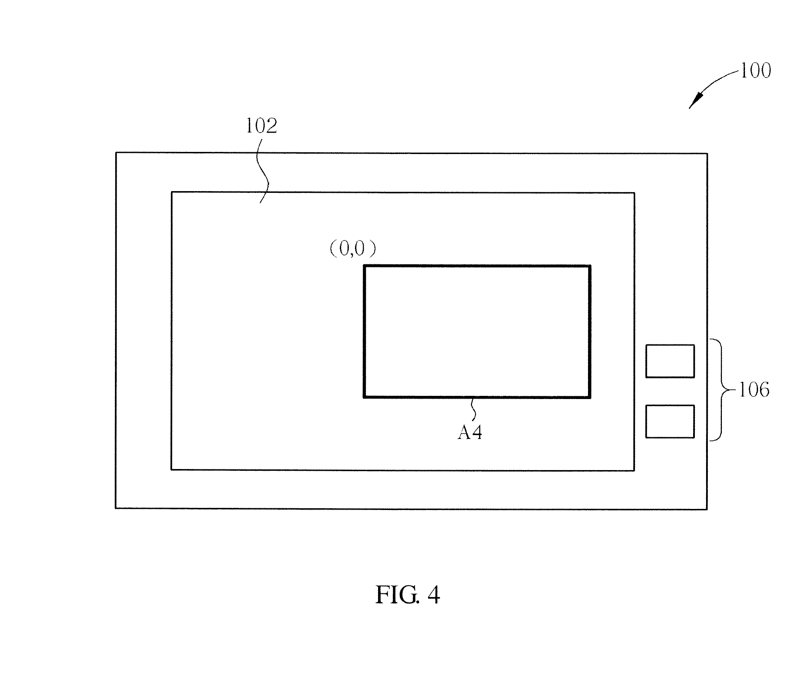

FIG. 4 is a schematic diagram showing that the predetermined format drawing module is operated in the OSD for drawing the actual size of the predetermined format (for example, the actual size of the standard A4 document) on a 19 inches monitor with thick solid lines according to an input device in an embodiment of the invention;

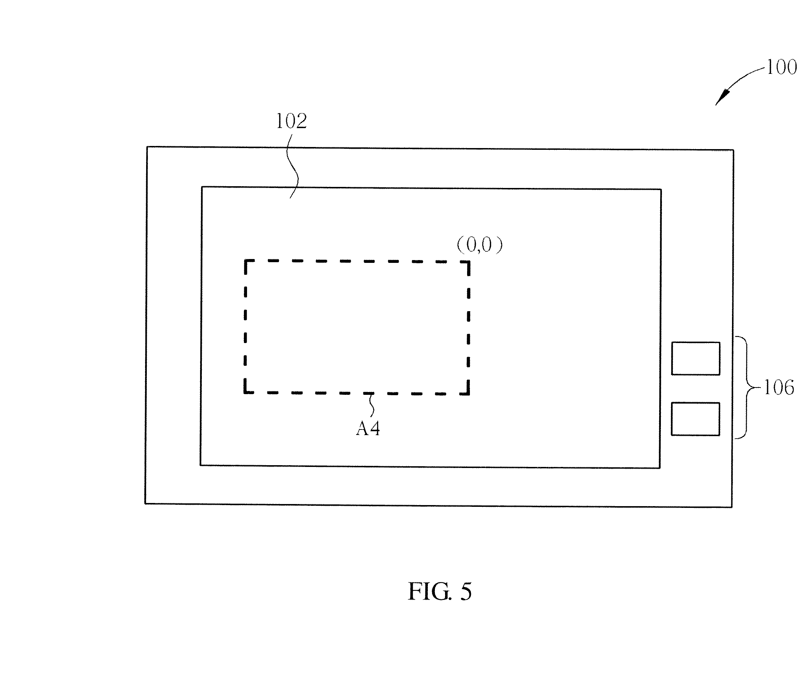

FIG. 5 is a schematic diagram showing that the user operates the predetermined format drawing module in the OSD for drawing the actual size of the predetermined format (for example, the actual size of the standard A4 document) on a 19 inches monitor with a thick dotted lines according to an input device in an embodiment;

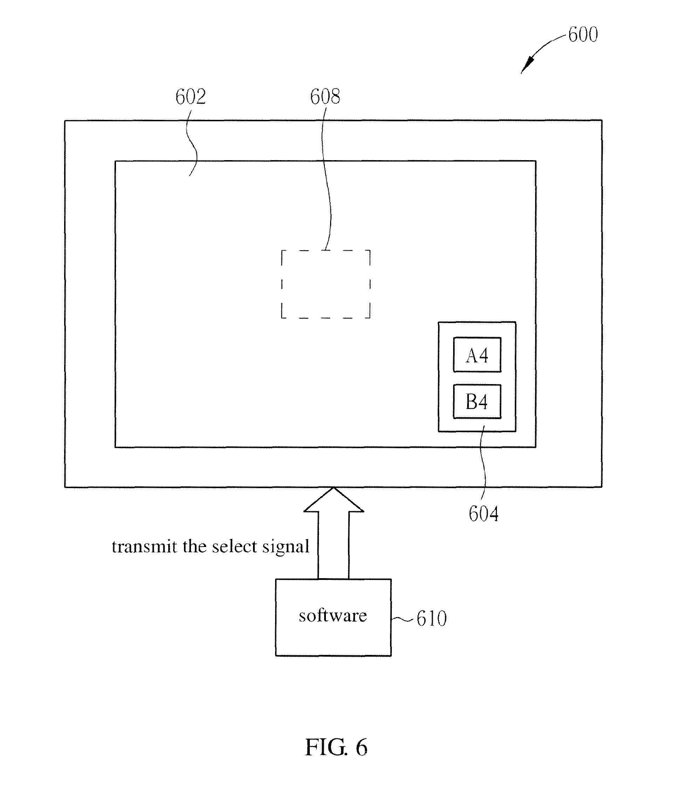

FIG. 6 is a schematic diagram showing a monitor capable of providing predetermined format in different sizes in an embodiment; and

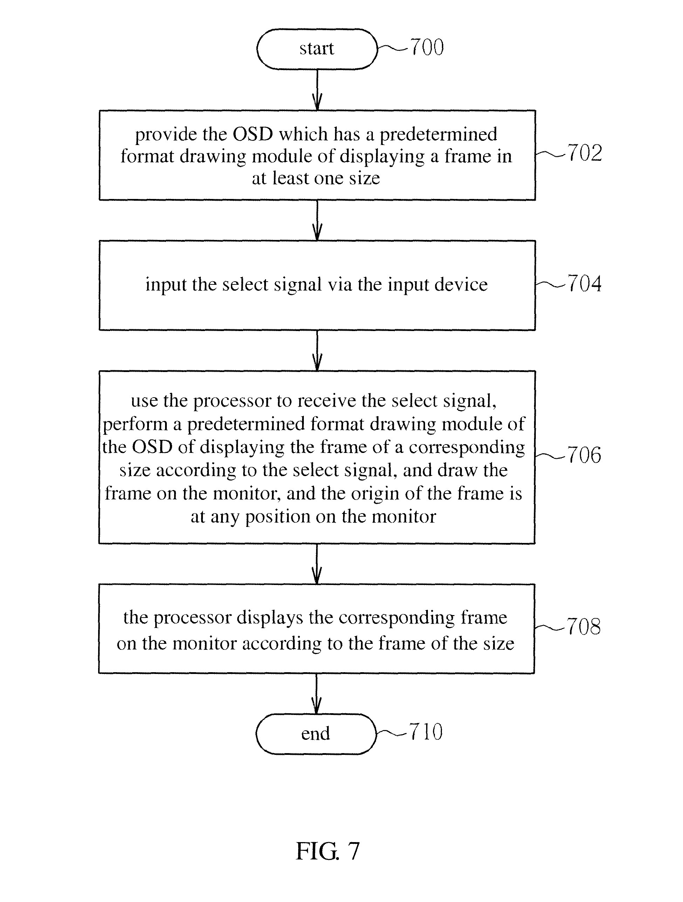

FIG. 7 is a flowchart showing a method for displaying an actual size standard document on a monitor in an embodiment.

### DETAILED DESCRIPTION OF THE EMBODIMENTS

FIG. 1 is a schematic diagram showing a monitor 100, the monitor is capable of providing a predetermined format in different sizes in an embodiment. The monitor 100 includes an OSD 104, an input device 106 and a processor 108. As shown in FIG. 1, the OSD 104 has a predetermined format drawing module for drawing a predetermined format in at least one size that corresponds to an actual size (such as variety actual size of the standard photos or standard documents or grids format). The input device 106 is disposed at the monitor 100 and includes at least one button to operate the predetermined format drawing module in the OSD 104 to select the predetermined format. As shown in FIG. 1, the input device 106 includes two buttons, which is not limited herein. The processor 108 is used for receiving the selected signal from the input device, and executing the predetermined format drawing module in the OSD, the monitor providing the predetermined format according to the selected signal, and the predetermined format with actual size is showed on the panel. Moreover, any position at the panel of monitor 102 can be a starting position of the predetermined format according to users' preference, and the processor 108 executing and drawing the predetermined format in actual size on the panel of the monitor 102 according to the starting position of the predetermined format. The predetermined format with actual size is provided on the monitor 102, the predetermined format comprises variety actual size of the standard photos or standard documents or grids format.

The OSD 104 is executed to draw the predetermined format in at least one size via the input device 106 disposed at the monitor 100. Then, the processor 108 receiving the selected signal and executing the predetermined format drawing module in the OSD according to the selected signal for drawing the a predetermined format (such as the actual size of the legal document , the card size, the actual size of the standard document A5, B5, A4, A3 or B4, the actual size of the standard photo , 3×5 or 4x6, and the actual size of the standard letter format) on the panel of the monitor 102 without using software executed by a computer(CPU) or other control systems. Each predetermined format corresponds to the actual size of the standard documents, standard photos or grid lines. The numbers of the predetermined format being drawn on the panel depend on the display size of the monitor 102. For example, an actual size of the standard A3 document occupies larger space than the display area of a 19 inches monitor, and thus the predetermined format corresponding to the actual size of the standard A3 cannot be drawn on the panel of the 19 inches monitor, and only the predetermined formats corresponding to the actual size which can be accommodated inside the 19 inches monitor can be drawn.

In an embodiment, the pixel pitch and the pixel size correspond to the actual size of various standard documents, standard photos, standard letters or grid lines are default values of various monitors provided by the monitor hardware manufacturers. For example, the pixel numbers on the 19 inches monitor correspond to the length and the width of the actual size of the A4 document. When a predetermined format is selected via the input device 106, the processor 108 received the selected signal and executed the predetermined format drawing module in the OSD according to the selected signal, and draws the predetermined format corresponds to the actual size of the standard photos or standard documents or grids format on panel of the monitor 102. The features of the predetermined formats, such as a solid line or a dotted line, the line thickness and the color, may be determined according to the preference of the users.

Please refer to FIG. 2, FIG. 3, FIG. 4 and FIG. 5. FIG. 2 is a schematic diagram showing that the predetermined format drawing module is operated in the OSD 104 for drawing the actual size of the predetermined format (for example, the actual size of the standard A4 document) on a 19 inches monitor 102 with solid lines via an input device 106 according to an instruction from the processor 108 in an embodiment. FIG. 3 is a schematic diagram showing that the predetermined format drawing module is operated in the OSD 104 for drawing the actual size of the predetermined format (for example, the actual size of the A4 document) on a 19 inches monitor 102 with dotted lines according to an instruction from the processor 108. FIG 4 is a schematic diagram showing that the predetermined format drawing module is operated in the OSD for drawing the actual size of the predetermined format (for example, the actual size of the standard A4 document) on a 19 inches monitor 102 with thick solid lines via an input device 106 according to an instruction from the processor 108 in an embodiment. FIG 5 is a schematic diagram showing that the predetermined format drawing module is operated in the OSD for drawing the actual size of the predetermined format (for example, the actual size of the standard A4 document) with a thick dotted line on a 19 inches monitor 102 via an input device 106 according to an instruction from the processor 108 in an embodiment. However, it is not limited to the embodiment above. Varies sizes of monitors, the predetermined formats and the predetermined format with the line such as a solid or a dotted line and the line thickness can be adjusted by demand.

Also, the starting position (0,0) of the predetermined format on the panel is not limited to be at the left top of the monitor 102, and any predetermined formats or marks in the actual size displayed on any position of the monitor 102 are within the scope of the invention.

FIG. 6 is a schematic diagram showing a monitor 600 capable of providing a predetermined format in different sizes in an embodiment. As shown in FIG. 6, the input device showed here is achieved by software 610, which is used for communicated with the monitor 600. The predetermined format drawing module in the OSD, a monitor 602, an OSD 604 and a processor 608 are the same as those of the monitor 102, the OSD 104, the input device 106 and the processor 108 of the monitor 100 in FIG. 1, which is omitted herein.

FIG. 7 is a flowchart showing a method for displaying an object on a display in an embodiment. The steps showed in FIG. 7 are illustrated with the monitor 100 in FIG. 1 as an example.

At Step 700, it starts;

At Step 702, the OSD 104 is provided which has a predetermined format drawing module for drawing a predetermined format;

At Step 704, the selected signal is inputted by the input device 106;

At Step 706, the processor 108 is received the selected signal, and executed a predetermined format drawing module in the OSD 104 for drawing the predetermined format on the panel of the monitor 102 according to the selected signal, and the starting position of the predetermined format is at any position on panel of the monitor 102;

At Step 708, the processor 108 draws the predetermined format corresponding to variety actual size of the standard photos or actual size of the standard documents or grids format on the panel of the monitor 102 ; and

At Step 710, it ends.

In sum, in the conventional technology, the method for editing and printing the predetermined format by software in a computer or a control system wastes much time on the repeated printing and checking, and it also wastes much paper and print resources. The monitor capable of providing the predetermined formats in varies actual sizes and the method for providing the predetermined formats on the panel in the monitor overcome at least the drawbacks of the conventional method. Furthermore, the embodiments are adapted to a liquid crystal display (LCD), a plasma monitor (PDP), an organic light emitting diode (OLED) display, a LED display or an outdoor billboards in various sizes. Thus, any technologies, methods or hardware structures providing the predetermined format (corresponds to actual sizes of the standard photo, corresponds to actual sizes of the standard documents, corresponds to actual sizes of the standard letters or grid lines) on the panel of the monitor are within the scope of the invention.

Although the present invention has been described in considerable detail with reference to certain preferred embodiments thereof, the disclosure is not for limiting the scope of the invention. Persons having ordinary skill in the art may make various modifications and changes without departing from the scope. Therefore, the scope of the appended claims should not be limited to the description of the preferred embodiments described above.

## Claims

1. A monitor (100) for providing a predetermined format, **characterized by** comprising:
a panel (102);
an on screen display (OSD) (104) including a predetermined format drawing module capable to draw a predetermined format from any position on the panel (102);
an input device (106) for inputting a selected signal; and
a processor (108) for receiving the selected signal, and executing the predetermined format drawing module in the OSD (104) according to the selected signal;
wherein the predetermined format corresponds to the actual size of a variety of objects.

2. The monitor (100) according to claim 1, **characterized in that** the variety of objects include the actual size of standard photos, actual size of standard documents or grids format.

3. The monitor (100) according to claim 1, **characterized in that** the input device (106) includes at least one button disposed at the monitor (100).

4. The monitor (100) according to claim 1, **characterized in that** the input device (106) includes software (610), and the software (610) is used for communicating with the monitor (100).

5. The monitor (100) according to claim 1, **characterized in that** the predetermined format is drawn with a solid line or a dotted line.

6. The monitor (100) according to claim 1, **characterized in that** the thickness and the color line of the predetermined format are adjustable.

7. The monitor (100) according to claim 1, **characterized in that** a starting pixel of the predetermined format is calculated according to pixels of the panel (102) to be taken as a starting position of the predetermined format, and an edge point of the predetermined format is calculated according to the selected signal.

8. The monitor (100) according to claim 1, **characterized in that** the monitor (100) is a liquid crystal monitor (LCD), a plasma monitor (PDP), an organic light emitting diode (OLED) monitor or a LED monitor.

9. A method for providing a predetermined format on a monitor (100), **characterized by** comprising:
providing an OSD including a predetermined format drawing module for drawing a predetermined format (S702);
inputting a selected signal via an input device (S704); and
receiving the selected signal by a processor which executes the predetermined format drawing module according to the selected signal to draw a predetermined format on the panel (S706);
wherein an starting position of the predetermined format is at any position of the panel (102).

10. The method according to claim 9, **characterized in that** the predetermined format corresponds to the actual size of a variety of objects which include standard photos, standard documents or grids format.

11. The method according to claim 9, **characterized in that** the input device (106) includes at least one button disposed at the monitor (100).

12. The method according to claim 9, **characterized in that** the input device (106) includes a software (610) which is used for communicating with the monitor (100).

13. The method according to claim 9, **characterized in that** the predetermined format is drawn with a solid line or a dotted line.

14. The method according to claim 9, **characterized in that** the thickness and the color of the line of the predetermined format are adjustable.

15. The method according to claim 9, **characterized in that** a starting pixel of the predetermined format is calculated according to pixels of the panel (102) to be taken as a starting position of the predetermined format, and an edge point of the predetermined format is calculated according to the selected signal.
